# EUROPÄISCHE PATENTSCHRIFT

(11) **EP 1 294 626 B1**
(45) Veröffentlichungstag und Bekanntmachung des Hinweises auf die Patenterteilung: **14.12.2005**
(21) Anmeldenummer: 01955218.1
(22) Anmeldetag: 26.06.2001
(51) Int. Cl.: B65G 53/30

(54) **VERFAHREN ZUM FÖRDERN EINES FESTSTOFFES**
METHOD FOR CONVEYING A SOLID SUBSTANCE
PROCEDE POUR LE TRANSPORT D'UNE MATIERE SOLIDE

(30) Priorität: 28.06.2000 DE 10030624
(43) Veröffentlichungstag der Anmeldung: 26.03.2003
(73) Patentinhaber: Zeppelin Silo- und Apparatetechnik GmbH, 88045 Friedrichshafen (DE)
(72) Erfinder: KRAMBROCK, Wolfgang, 88267 Vogt (DE)
(74) Vertreter: Roth, Klaus
(86) Internationale Anmeldenummer: PCT/DE2001/002348
(87) Internationale Veröffentlichungsnummer: WO 2002/000535

(56) Entgegenhaltungen:
- EP-A- 0 358 354
- FR-A- 953 129
- GB-A- 1 347 614
- US-A- 2 686 085

## Beschreibung

Die Erfindung betrifft ein Verfahren nach dem Oberbegriff des Anspruchs 1 und eine Vorrichtung nach dem Oberbegriff des Anspruchs 15.

Aus der DE 197 55 732 C2 ist es beispielsweise bekannt, eine Dispersion aus Granulat und Wasser durch eine Rohrleitung zu transportieren. Zur Erzeugung einer Dispersion aus Feststoff und Flüssigkeit ist es bekannt den Feststoff zunächst in einen mit Flüssigkeit gefüllten Behälter zu gegeben und mit einer mechanischen Rührvorrichtung mit der Flüssigkeit zu mischen. Anschließend wird das Feststoff-Flüssigkeitsgemisch am Boden des Behälters abgezogen. Dies geschieht durch eine Kreiselpumpe, die das Feststoff-Flüssigkeitsgemisch von ihrer axialen Eintrittsöffnung zur tangentialen Austrittsöffnung in die Rohrleitung pumpt.

Nachteilig an diesem Verfahren ist, dass der Feststoff sowohl durch das im Behälter angeordnete Rührwerk als auch durch die Pumpe mechanischen Belastungen unterliegt, die zu unerwünschtem Abrieb am Feststoff und/oder zur Beschädigung empfindlicher Feststoffpartikel führen. Besonders nachteilig wirkt sich dieses Verfahren auf einen Feststoff aus, dessen spezifisches Gewicht geringer ist als das spezifische Gewicht der Flüssigkeit, die zum Transport des Feststoffes dient, da der spezifisch leichtere Feststoff, ähnlich wie bei einer Zentrifuge, die Tendenz besitzt, sich im Zentrum des Laufrades der Kreiselpumpe anzusammeln. Hierdurch verschlechtert sich der Wirkungsgrad der Pumpe, da der Feststoff vom Zentrum des Laufrades weggedrückt werden muss. Weiterhin unterliegt der Feststoff besonders hohen mechanischen Beanspruchungen, da die einzelnen Feststoffpartikel, die sich im Zentrum der Pumpe sammeln, aneinander reiben. Auch im Behälter selbst erfährt der spezifisch leichtere Feststoff eine erhöhte Belastung, da er durch das mechanische Rührwerk entgegen der Auftriebskraft zur bodenseitigen Austragsöffnung gezwungen wird.

Weiterhin ist aus der Druckschrift FR 95 31 29 gemäß den Oberbegriffen der Ansprüche 1 und 15, ein Mischbehälter bekannt, in dem mit rotierender Strömung eine Dispersion hergestellt wird, die anschließend einem Förderkreislauf beigegeben wird.

Konstruktionsbedingt muss dabei die Förderpumpe für den hydraulischen Transport die Strömungsrichtung hinter dem Behälter liegen, in dem die Dispersion erzeugt wird. Demnach wird die Pumpe mit der aus Fördermedium und Feststoffpartikel bestehenden Dispersion belastet, was zu einem erhöhten Verschleiß und zu vermindertem Wirkungsgrad führt.

In dieser Druckschrift ist eine halbvolle Förderleitung erkennbar, in welche die Dispersion zugesetzt wird. Eine zuverlässige hydraulische Förderung kann hier zwangsweise nur dann stattfinden, wenn eine in Strömungsrichtung nachgeschaltete Pumpe eingesetzt wird.

Aufgabe der Erfindung ist es, demgegenüber eine Vorrichtung zum Fördern eines Feststoffs in einem Fördermedium vorzuschlagen, bei der die Förderpumpe so angeordnet werden kann, dass sie nicht mit der Dispersion aus Förderflüssigkeit und Feststoff in Kontakt kommt, wodurch die Pumpe einem geringeren Verschleiß unterliegt und einen höheren Wirkungsgrad hat.

Diese Aufgabe wird erfindungsgemäß, durch die kennzeichnenden Merkmale der Ansprüche 1 und 15 gelöst. In den Unteransprüchen sind vorteilhafte und zweckmäßige Weiterbildungen angegeben.

Dementsprechend ist vorgesehen, dass der Behälter gegenüber der Umgebung unter Druck steht. Durch diese Maßnahme ist eine Anordnung mit einer Förderpumpe vor dem Behälter möglich, wobei keine Pumpe in der Förderleitung vorhanden ist, in der die Dispersion transportiert wird.

Durch die Vorschaltung der Förderpumpe kommt diese nur mit dem reinen Fördermedium, beispielsweise Wasser in Kontakt, sodass der Wirkungsgrad der Förderpumpe verbessert und der Verschleiß verringert wird.

Gemäß der Erfindung wird durch das in den als Sendebehälter ausgebildeten Behälter einströmende Fördermedium, z.B. Wasser, eine abwärts rotierende Strömung erzeugt, wobei der Feststoff vom Fördermedium zum Auslauf geführt wird. Durch diese spiralförmige, stark nach unten zum Auslauf gerichtete Wegführung des Fördermediums wird der auf das Fördermedium treffende Feststoff vom Fördermedium mitgenommen und verlässt den Sendebehälter gemeinsam mit dem Fördermedium in eine Rohrleitung. Zur Ausbildung eines derartigen Stromes ist keine Bewegungsmechanik im Sendebehälter erforderlich und demnach erfolgt auch kein Abrieb und Belastungen verursachender Kontakt der einzelnen Feststoffpartikel mit sich bewegenden mechanischen Bauteilen wie einem Rührwerk oder einem Laufrad einer Pumpe.

Durch die Erzeugung der Strömung mittels eines weitestgehend tangential einströmenden Fördermedium ist es möglich, die Strömung im Behälter zu erzeugen, ohne dass hierfür Bauraum im Behälter erforderlich ist.

Die Zugabe des Feststoffes in den Behälter mittels einer Dosiervorrichtung erlaubt es, Fördermedium und Feststoff genau aufeinander abzustimmen und hierdurch ein für die hydraulische Förderung optimales Verhältnis von Flüssigkeitsanteil und Feststoffanteil im Feststoff-Flüssigkeitsgemisch einzustellen.

Eine vorteilhafte Ausbildung des Erfindungsgegenstandes sieht vor Feststoffe mit geringerer oder höherer oder etwa gleich hoher Dichte wie das Fördermedium zu fördern. Hierdurch kann mit einem Verfahren die Förderung der unterschiedlichsten Feststoffe durchgeführt werden, so dass das Verfahren zur Förderung eines Feststoffes mit andere Dichte nicht umgestellt werden muss.

Durch die Ausbildung einer Strömung mit Pumpwirkung ist es möglich die mechanische Pumpe zur Aufrechterhaltung des Strömungskreislaufes des Fördermediums an einer Stelle anzuordnen, an der diese nur reines Fördermedium fördern muss. Somit kann die Pumpe unabhängig von dem jeweils zu fördernden Feststoff für die Förderung eines bestimmten Fördermediums optimiert werden.

Durch den Antrieb des im Sendebehälter vorhandenen Fördermediums mittels des neu in den Sendebehälter eintretenden Fördermediums lässt sich die Rotationsbewegung des Fördermediums im Sendebehälter allein durch die Strömungsenergie des zuströmenden Fördermediums ausbilden und aufrechterhalten.

Weiterhin sieht der Erfindungsgegenstand vor, den Strom des Fördermediums auf einer Spiralbahn eines insbesondere rotationssymmetrischen, sich insbesondere verjüngenden Sendebehälters auf einen Auslauf zuzuführen. Somit entsteht im Behälter eine Art Zyklon, der im Gegensatz zu einem Zyklonabscheider nur einen Ablauf aufweist. Mit anderen Worten wird durch die strahlerzeugte Drehung des Fördermediums im Behälter ein Strudel ausgebildet, der in einen Ablauf abläuft.

Eine vorteilhafte Ausbildung des Erfindungsgegenstandes sieht vor, den Sendebehälter zum Auslauf hin konisch auszubilden. Durch die konische Ausbildung des Sendebehälters wird die Ausbildung eines auf einer sich verengenden Spiralbahn verlaufenden Flüssigkeitsstromes begünstigt, da dieser durch die Behälterwand geführt wird.

Es ist vorteilhaft, wenn das als Flüssigkeit vorliegende Fördermedium etwa parallel zur Wand des Behälters und etwa senkrecht zu einer Sendebehälterachse über eine Zufuhrdüse in den Behälter einströmt. Hierdurch wird erreicht, dass sich der Flüssigkeitsstrom als Ganzes gesehen wie eine ringförmige Mantelschicht an die Wand des Behälters anlehnt und von dieser geleitet wird. Durch den Winkel, den die Zufuhrdüse mit einer senkrecht zur Behälterlängsachse verlaufenden Ebene bildet, ist der Steigungswinkel der Spiralbahn beeinflussbar.

Gemäß einer besonderen Ausführungsform des erfindungsgemäßen Verfahrens ist vorgesehen, den Feststoff, bei dem es sich beispielsweise um Kunststoffgranulat handelt, über eine Zellenradschleuse in den Sendebehälter einzubringen. Somit kann auch ein Sendebehälter beaufschlagt werden, in dessen Innenraum ein gegenüber der Umgebung erhöhter Druck vorherrscht.

Erfindungsgemäß wird weiter vorgeschlagen, den Feststoff dem Behälter in einem vom Fördermedium nicht durchströmten Bereich zuzuführen. Hierzu reicht eine einfache Öffnung im Behälter aus, durch die Feststoff zugeführt wird.

Insbesondere ist es vorteilhaft, den Feststoff gezielt einem Hohlkegel zuzuführen, der durch das sich auf einer Spiralbahn bewegende Fördermedium ausgebildet wird, da die gesamte Kegelmantelfläche des Hohlkegels als Zuführfläche für den Feststoff zur Verfügung steht und der Feststoff von der Kegelmantelfläche zum Auslauf bzw. zur Behälterachse gefördert wird.

Eine besondere Ausbildungsform des Erfindungsgegenstandes sieht vor, den Feststoff als Feststoff-Flüssigkeitsgemisch dem Fördermedium zuzuführen. Hierdurch ist es möglich auch Feststoffe zu fördern, die bereits als Feststoff-Flüssigkeitsgemisch vorliegen.

In einer bevorzugten Ausgestaltung weist die erfindungsgemäße Vorrichtung einen sich zum Ausfluss hin verengenden Behälter auf, der eine Zufuhrdüse für ein flüssiges Fördermedium besitzt, die im Wesentlichen senkrecht zu einer Hauptachse des Behälters und parallel zur Behälterwand ausgerichtet ist. Durch eine derart angeordnete Zufuhrdüse lässt sich entlang der Wand des Behälters auf einfache Weise eine auf einer Spiralbahn zum Ausfluss verlaufende Flüssigkeitsströmung ausbilden.

Eine weitere vorteilhafte Ausbildung der Vorrichtung sieht vor, an der Behälterwand mehrere Zufuhrdüsen anzuordnen, die vorzugsweise in einer senkrecht zur Behälterlängsachse ausgerichteten Ebene liegen. Hierdurch ist es möglich größere Flüssigkeitsmengen in den Behälter einströmen zu lassen, die von der Behälterwand geführt werden und sich zu einem gemeinsamen, saugenden Spiralstrom vereinigen.

Vorteilhaft ist es auch, das Profil der Strömung im Sendebehälter durch eine Veränderung des Einlaufquerschnitts zu bestimmen. Auf diese Weise kann die Förderanlage auf die Förderung unterschiedlicher Feststoffe eingestellt werden.

Eine Modifikation der Erfindung sieht vor, das Niveau des Fördermediums im Sendebehälter durch eine Gasdruckregelung einzustellen. Somit ist es möglich, dem Füllstand des Behälters zu beeinflussen und ein Ansteigen des Fördermediums bis in das oberhalb des Behälters angeordnete Dosiergerät zu verhindern.

Weitere Einzelheiten der Erfindung werden in der Zeichnung anhand von schematisch dargestellten Ausführungsbeispielen beschrieben.

Hierbei zeigt
- Fig. 1: eine schematische Ansicht einer Anlage zur hydraulischen Förderung,
- Fig. 2: eine schematische Schnittansicht eines Sendebehälters,
- Fig. 3: eine schematische Schnittansicht eines weiteren Sendebehälters,
- Fig. 4: eine Schnittansicht entlang der Schnittlinie IV-IV durch den in Figur 3 dargestellten Sendebehälter,
- Fig. 5: eine Schnittansicht eines weiteren Sendebehälters,
- Fig. 6: eine Schnittansicht eines Sendebehälters mit veränderbarem Einlaufquerschnitt.

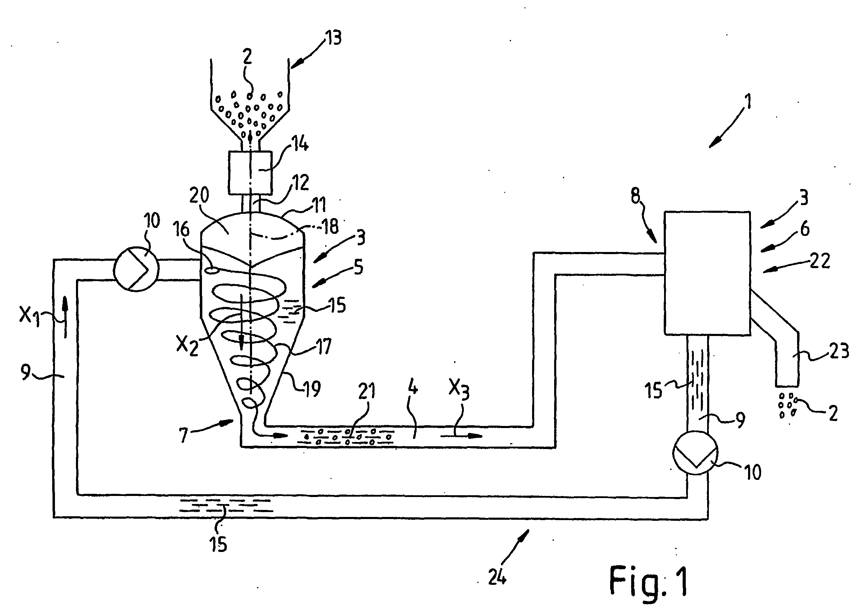

Figur 1 zeigt eine schematische Ansicht einer Anlage 1 zur hydraulischen Förderung von Feststoff 2. Die Anlage 1 besteht im Wesentlichen aus zwei Speichern 3, die über ein Förderrohr 4 miteinander verbunden sind, wobei der eine Speicher 3 als Behälter 5 und der andere Speicher 3 als Empfangsbehälter 6 ausgebildet ist. Der Behälter 5 geht über einen Auslauf 7 in das Förderrohr 4 über. Dieses mündet mit einem Einlauf 8 in den Empfangsbehälter 6. Der Behälter 5 steht über eine Zuleitung 9, in der motorgetriebene Pumpen 10 angeordnet sind, mit dem Empfangsbehälter 6 in Verbindung. Weiterhin steht der Behälter 5 über eine in einen Behälterdeckel 11 mündende Zuleitung 12 mit einem Vorratsbehälter 13 in Verbindung, in dem der Feststoff 2 bereitgehalten wird. Der Feststoff 2 wird dem Behälter 5 über eine Dosiervorrichtung 14 zugeführt. In der Zuleitung 9 befindliches Fördermedium 15 wird mit Hilfe der Pumpen 10 in Pfeilrichtung x₁ gefördert und über eine tangential zum im Querschnitt runden Behälter 5 angeordnete Düse 16 in das sich im Behälter 5 befindende Fördermedium 15 geleitet. Durch die Einleitung des Fördermediums 15 in den Behälter 5 stellt sich in diesem eine Strömung 17 ein, die sich um eine Behälterachse 18 drehend zum Auslauf 7 verläuft, wobei der Auslauf 7 in einem sich konisch verjüngenden Boden 19 des Behälters 5 angeordnet ist. Der Feststoff 2, der spezifisch leichter ist als das Fördermedium 15 wird mittels der Dosiervorrichtung 14 durch einen Freiraum 20 auf das sich im Behälter 5 befindende Fördermedium 15 geschüttet und durch die Strömung 17, wie bei einer Zentrifuge, zur Behälterachse 18 hin geführt und dabei in Pfeilrichtung x₂ zum Auslauf 7 des Behälters 5 gezogen.

Den Auslauf 7 verlässt der Feststoff 2 zusammen mit dem Fördermedium 15 als Feststoff-Flüssigkeitsgemisch 21, das in der Strömung 17 entstanden ist, durch das Förderrohr 4 in Pfeilrichtung x₃. Durch den Einlauf 8 tritt das Feststoff-Flüssigkeitsgemisch 21 in den Empfangsbehälter 6 ein, der als Abscheider 22 ausgebildet ist. Im Abscheider 22 wird das Feststoff-Flüssigkeitsgemisch 21 in Feststoff 2 und Fördermedium 15 getrennt. Der Feststoff 2 tritt aus dem Abscheider 22 durch einen Stutzen 23 aus. Das Fördermedium 15 tritt in die Zuleitung 9 ein, in der es mittels der Pumpen 10 wieder zum Behälter 5 gefördert wird und sich auf diese Weise in einem Fördermediumkreislauf 24 bewegt.

Gemäß einer nicht dargestellten Ausführungsvariante ist es vorgesehen, den Empfangsbehälter als Empfangs-/Sendebehälter auszuführen, wobei in einem oberen Teil des Behälters dem Feststoff das Fördermedium wenigstens teilweise entzogen wird und in einem unterem Teil des Behälters durch einströmendes Fördermedium analog zum Sendebehälter ein Flüssigkeitsstrom ausgebildet wird, über den der Feststoff beziehungsweise das Feststoff-Flüssigkeitsgemisch in einen weiteren Behälter gepumpt werden kann. Selbstverständlich kann die Trennung der Suspension und das Weiterfördern auch in getrennten Behältern erfolgen. Große Förderstrecken können somit durch eine Aneinanderreihung von Sende- und Empfangsbehältern realisiert werden. Gegebenenfalls können auch Zwischenspeicher vorgesehen sein.

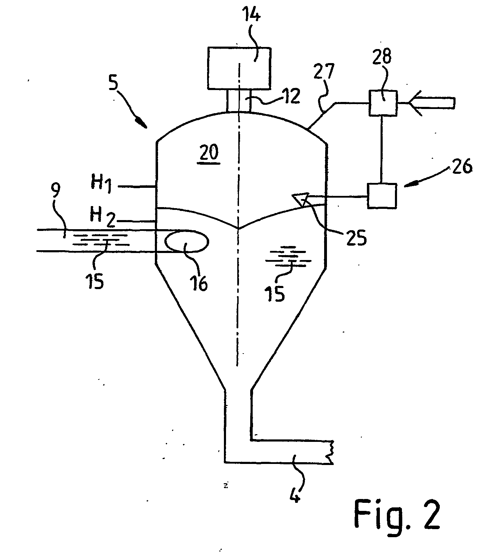

Figur 2 zeigt eine schematische Schnittansicht eines Behälters 5, der als Dispergierbehälter dient. Ein Niveau 25 eines im Behälter 5 vorhandenen Fördermediums 15 wird durch eine Gasdruckregelung 26 im Wesentlichen konstant gehalten. Steigt das Niveau 25 bzw. der Füllstand des Fördermediums 15 über eine Füllhöhe H₁ hinaus, dann wird mittels der Gasdruckregelung 26 der in einem Freiraum 20 des Behälters herrschende Druck erhöht, so dass ein Nachströmen von Fördermedium 15 aus einer Zuleitung 9 durch eine Düse 16 in den Behälter 5 zumindest teilweise verhindert wird. Die Beaufschlagung des Freiraumes 20 mit Gas erfolgt über eine Gasleitung 27 und ein dieser zugeordnetes Regelventil 28, das von der Gasdruckregelung 26 geregelt wird. Sinkt das Niveau 25 des Fördermediums 15 unter eine Füllhöhe H₂ ab, dann wird mittels der Gasdruckregelung 26 der in einem Freiraum 20 des Behälters 5 herrschende Druck verringert, so dass dem aus der Zuleitung 9 nachströmenden Fördermedium 15 weniger Widerstand entgegengesetzt wird.

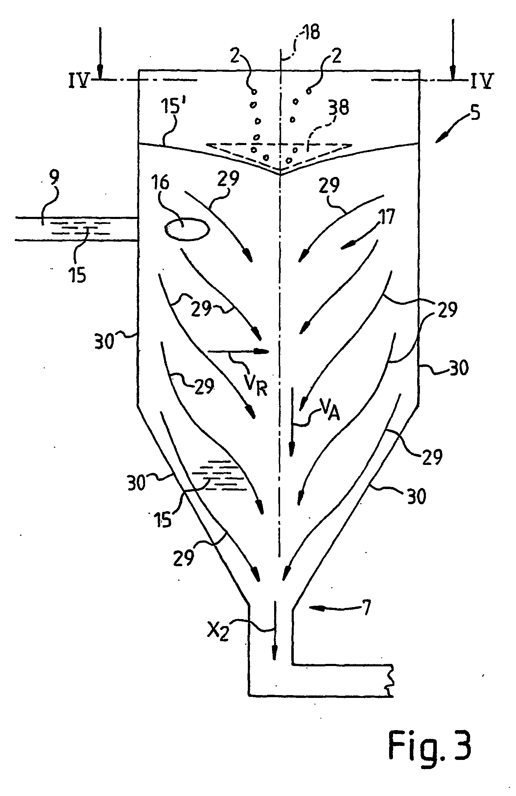

Figur 3 zeigt eine schematische Schnittansicht eines weiteren Behälters 5. Durch Pfeile 29 ist der typische Verlauf einer Strömung 17 dargestellt, die durch ein aus einer Zuleitung 9 durch eine Düse 16 in den Behälter 5 tangential eintretendes Fördermedium 15 entsteht. Das Fördermedium 15 strömt von einer Behälterwand 30 zu einer Behälterachse 18 hin, wobei es sich gleichzeitig in eine Pfeilrichtung x₂ auf einen Auslauf 7 des Behälters 5 zu bewegt. Somit besitzt das Fördermedium 15 eine axiale Geschwindigkeitskomponente v_{A} und eine radiale Geschwindigkeitskomponente v_{R}. Durch die Strömung 17 bildet das Fördermedium 15 an einer Oberfläche 15' einen kegelförmigen Trichter 38 aus, durch den der auf die Oberfläche 15' auftreffende Feststoff 2 bereits zur Behälterachse 18 bzw. in Richtung des Auslaufes 7 geführt wird.

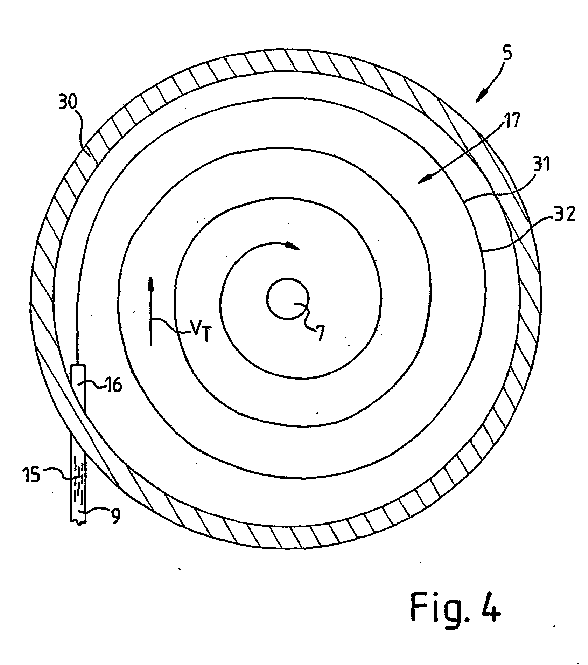

Figur 4 zeigt eine schematische Schnittansicht des in Figur 3 dargestellten Behälters 5, wobei die in diesem ausgebildete Strömung 17 durch einen Pfeil 31 symbolisiert wird. Das über die Zuleitung 9 durch die Düse 16 zugeführte Fördermedium 15 strömt auf einer Spiralbahn 32 entlang der Behälterwand 30 auf den Auslauf 7 zu und besitzt somit eine tangentiale Geschwindigkeitskomponente v_{T}. Das Fördermedium 15 bzw. der Feststoff 2 weisen axiale, radiale und tangentiale Geschwindigkeitskomponenten v_{A}, v_{R}, v_{T} auf, wobei die Geschwindigkeit zum Auslauf 7 hin zunimmt.

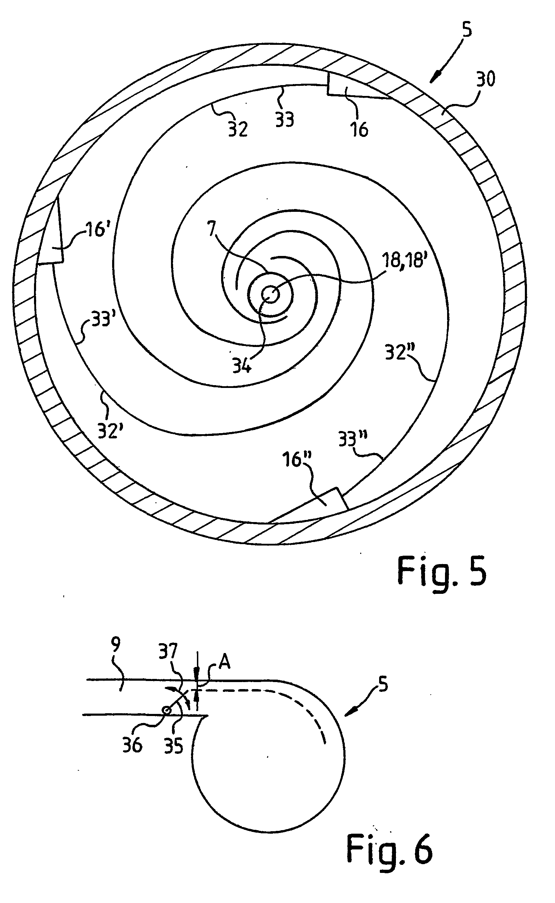

Figur 5 zeigt eine schematische Schnittansicht eines weiteren Behälters 5. Im Behälter 5 sind drei Düsen 16 bis 16" angeordnet, die auf gleicher Höhe gleichmäßig an einer Behälterwand 30 angeordnet sind. Die Düsen 16 bis 16" erzeugen Strahlen 33 bis 33", die auf Spiralbahnen 32 bis 32" in Richtung einer Behälterachse 18 beziehungsweise Spiralachse 18' (durch ein Pfeilende 34 angedeutet) auf einen Auslauf 7 zulaufen.

Figur 6 zeigt eine Schnittansicht eine Behälters 5, der eine Zuleitung 9 aufweist, die eine Düse 16 mit einem veränderbaren Einlaufquerschnitt A aufweist. Der Einlaufquerschnitt A ist durch eine Klappe 35, die um eine Gelenk 36 in die Pfeilrichtungen 37 drehbar ist, einstellbar. Je nach Dichtedifferenz zwischen Feststoff 2 und Fördermedium 15 lassen sich die Geschwindigkeitskomponenten v_{A}, v_{R}, v_{T} durch die Gestaltung des Einlaufquerschnitts A variieren.

Die Beschreibung der Ausführungsbeispiele erfolgte unter der Annahme, dass als Fördermedium Wasser eingesetzt wird und als Fördergut Kunststoffgranulat zum Einsatz kommt, das leichter oder etwa gleich leicht wie Wasser ist.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, Feststoff zu fördern, der spezifisch schwerer ist als das Fördermedium. Hierbei bewirkt die rotierende Strömung, dass der Feststoff schon vor dem Durchtritt durch den Auslauf des Behälters in einer drehenden Bewegung ist und so einer Verstopfung wirksam entgegengewirkt wird.

Eine weitere nicht dargestellte Ausführungsvariante sieht vor, die Spiralströmung in einem Rohr vorzugsweise durch Leitbleche auszubilden und den Feststoff über beispielsweise eine Leitung oder eine Zellenradschleuse dem sich drehenden Flüssigkeitsstrom zuzuführen.

### Bezugszeichenliste:

- 1: Anlage
- 2: Feststoff
- 3: Speicher
- 4: Förderrohr
- 5: Behälter
- 6: Empfangsbehälter
- 7: Auslauf
- 8: Einlauf
- 9: Zuleitung
- 10: Pumpe
- 11: Behälterdeckel
- 12: Zuleitung
- 13: Vorratsbehälter
- 14: Dosiervorrichtung
- 15: Fördermedium
- 15': Oberfläche
- 16: Düse
- 17: Strömung
- 18: Behälterachse
- 19: Boden
- 20: Freiraum
- 21: Feststoff- Flüssigkeitsgemisch
- 22: Abscheider
- 23: Stutzen
- 24: Fördermediumkreis- lauf
- 25: Niveau
- 26: Gasdruckregelung
- 27: Gasleitung
- 28: Regelventil
- 29: Pfeil
- 30: Behälterwand
- 31: Pfeil
- 32: Spiralbahn
- 33: Strahl
- 34: Pfeilende
- 35: Klappe
- 36: Gelenk
- 37: Pfeilrichtung
- 38: Trichter

## Patentansprüche

1. Verfahren zum Fördern eines Feststoffes in einem Fördermedium (15), wobei der Feststoff (2) einem Behälter (5) mit Auslauf (7) zugeführt wird und das in den Behälter (5) einströmende Fördermedium (15) eine abwärts rotierende Strömung (17) erzeugt, durch die der Feststoff (2) vom Fördermedium (15) zum Auslauf (7) geführt wird, **dadurch gekennzeichnet, dass** der Behälter (5) gegenüber der Umgebung unter Druck gesetzt wird.

2. Verfahren nach Anspruch 1, **dadurch gekennzeichnet, dass** die abwärtsgerichtete, rotierende Strömung (17) durch das weitestgehend tangential einströmende Fördermedium (15) erzeugt wird.

3. Verfahren nach einem der vorhergehenden Ansprüche, **dadurch gekennzeichnet, dass** der Feststoff (2) dem Behälter (5) von oben, insbesondere durch eine Dosiervorrichtung (14) zugegeben wird.

4. Verfahren nach einem der vorhergehenden Ansprüche, **dadurch gekennzeichnet, dass** die Dichte des Feststoffes (2) geringer oder höher oder etwa gleich ist wie die Dichte des Fördermediums (15).

5. Verfahren nach einem der vorhergehenden Ansprüche, **dadurch gekennzeichnet, dass** eine zur Förderung des Feststoffes (2) und des Fördermediums (15) bzw. eines Feststoff-Flüssigkeitsgemisches (21) eingesetzte Pumpe (10) nur vom Fördermedium (15) durchströmt wird.

6. Verfahren nach einem der vorhergehenden Ansprüche, **dadurch gekennzeichnet, dass** das im Behälter (5) vorhandene Fördermedium (15) durch das in den Behälter (5) eintretende Fördermedium (15) in eine Rotationsbewegung versetzt wird.

7. Verfahren nach einem der vorhergehenden Ansprüche, **dadurch gekennzeichnet, dass** die Strömung (17) des Fördermediums (15) auf einer Spiralbahn (32) des insbesondere rotationssymmetrischen, sich insbesondere verjüngenden Behälters (5) auf einen Auslauf (7) zugeführt wird.

8. Verfahren nach einem der vorhergehenden Ansprüche, **dadurch gekennzeichnet, dass** das Fördermedium (15) etwa parallel zur Behälterwand (30) und etwa senkrecht zu einer Behälterachse (18) über eine Düse (16) in den Behälter (5) eintritt.

9. Verfahren nach einem der vorhergehenden Ansprüche, **dadurch gekennzeichnet, dass** der Feststoff (2) über eine Zellenradschleuse in den Behälter (5) eingebracht wird.

10. Verfahren nach einem der vorhergehenden Ansprüche, **dadurch gekennzeichnet, dass** der Feststoff (2) dem Behälter (5) in einem vom Fördermedium (15) nicht durchströmten Bereich (20) zugeführt wird.

11. Verfahren nach einem der vorhergehenden Ansprüche, **dadurch gekennzeichnet, dass** der Feststoff (2) in einen durch das Fördermedium (15) ausgebildeten Hohlkegel (38) zugeführt wird.

12. Verfahren nach einem der vorhergehenden Ansprüche, **dadurch gekennzeichnet, dass** der Feststoff (2) als Feststoff-Flüssigkeitsgemisch (21) dem Fördermedium (15) zugeführt wird.

13. Verfahren nach einem der vorhergehenden Ansprüche, **dadurch gekennzeichnet, dass** das Strömungsprofil der Strömung (17) im Behälter (5) durch eine Veränderung des Einlaufquerschnitts (A) bestimmt wird.

14. Verfahren nach einem der vorhergehenden Ansprüche, **dadurch gekennzeichnet, dass** ein Niveau (25) des Fördermediums (15) im Behälter (5) durch eine Gasdruckregelung (26) eingestellt wird.

15. Vorrichtung zum Fördern eines Feststoffes in einem Fördermedium mit einem Sendebehälter (5)mit Auslauf (7), mit abwärts rotierender Strömung (17) des Fördermediums und mit einer zugabevorrichtung zur Zugabe des Feststoffs zu dem Fördermedium in dem Sendebehälter (5), **dadurch gekennzeichnet, dass** der Sendebehälter (5) gegenüber der Umgebung unter Druck steht.

## Claims

1. A method for conveying a solid substance in a conveying medium (15), the solid substance (2) being supplied to a container (5) having an outlet (7) and the conveying medium (15) flowing into the container (5) producing a downwardly rotating flow (17), through which the solid substance (2) is guided by the conveying medium (15) to the outlet (7),
**characterised in that** the container (5) is pressurised in relation to the surroundings.

2. A method according to Claim 1,
**characterised in that** the downwardly directed, rotating flow (17) is produced to the very largely tangentially inflowing conveying medium (15).

3. A method according to one of the preceding Claims,
**characterised in that** the solid substance (2) is added to the container (5) from above, in particular by a metering device (14).

4. A method according to one of the preceding Claims,
**characterised in that** the density of the solid substance (2) is lower than or higher than or roughly equal to the density of the conveying medium (15).

5. A method according to one of the preceding Claims,
**characterised in that** only conveying medium (15) flows through a pump (10) used to convey the solid substance (2) and the conveying medium (15) or a solid-liquid mixture (21).

6. A method according to one of the preceding Claims,
**characterised in that** the conveying medium (15) present in the container (5) is set into a rotational movement by the conveying medium (15) entering the container (5).

7. A method according to one of the preceding Claims,
**characterised in that** the flow (17) of the conveying medium (15) is supplied in a spiral path (32) of the in particular rotationally symmetrical, in particular tapering converter (5) to an outlet (7).

8. A method according to one of the preceding Claims,
**characterised in that** the conveying medium (15) enters the container (5) via a nozzle (16) roughly parallel to the container wall (30) and roughly perpendicularly to a container axis (18).

9. A method according to one of the preceding Claims,
**characterised in that** the solid substance (2) is introduced into the container (5) via a cellular wheel sluice.

10. A method according to one of the preceding Claims,
**characterised in that** the solid substance (2) is supplied to the container (5) in a region (20) through which the conveying medium (15) does not flow.

11. A method according to one the preceding Claims,
**characterised in that** the solid substance (2) is supplied into a hollow cone (38) formed by the conveying medium (15) .

12. A method according to one of the preceding Claims,
**characterised in that** the solid substance (2) is supplied to the conveying medium (15) as a solid-liquid mixture (21).

13. A method according to one of the preceding Claims,
**characterised in that** the flow profile of the flow (17) in the container (5) is determined by a change in the inlet cross section (A).

14. A method according to one the preceding Claims,
**characterised in that** one level (25) of the conveying medium (15) in the container (5) is set by gas pressure control (26).

15. An apparatus for conveying a solid substance in a conveying medium having a supply container (5) with an outlet (7), having a downwardly rotating flow (17) of the conveying medium and having an addition device for the addition of the solid substance to the conveying medium in the supply container (5),
**characterised in that** the supply container (5) is pressurised in relation to the surroundings.

## Revendications

1. Procédé destiné à transporter une matière solide dans un milieu de transport (15), la matière solide (2) étant acheminée vers un récipient (5) ayant une sortie (7) et le milieu de transport (15) affluant dans le récipient (5) produisant un flux tournant descendant (17) grâce auquel la matière solide (2) est guidée par le milieu de transport (15) vers la sortie (7),
**caractérisé en ce que** le récipient (5) est mis sous pression par rapport au milieu ambiant.

2. Procédé selon la revendication 1,
**caractérisé en ce que** le flux tournant dirigé vers le bas (17) est produit par le milieu de transport (15) affluant essentiellement de manière tangentielle.

3. Procédé selon l'une des revendications précédentes,
**caractérisé en ce que** la matière solide (2) est introduite dans le récipient (5) par le haut, en particulier par un dispositif de dosage (14).

4. Procédé selon l'une des revendications précédentes,
**caractérisé en ce que** la densité de la matière solide (2) est inférieure ou supérieure ou à peu près égale à la densité du milieu de transport (15).

5. Procédé selon l'une des revendications précédentes,
**caractérisé en ce qu'**une pompe (10) utilisée pour le transport de la matière solide (2) et du milieu de transport (15) ou d'un mélange matière solide/liquide (21) n'est traversée que par le milieu de transport (15).

6. Procédé selon l'une des revendications précédentes,
**caractérisé en ce que** le milieu de transport (15) présent dans le récipient (5) est déplacé dans un mouvement de rotation par le milieu de transport (15) pénétrant dans le récipient (5).

7. Procédé selon l'une des revendications précédentes,
**caractérisé en ce que** le flux (17) du milieu de transport (15) est acheminé vers une sortie (7) sur une voie en spirale (32) du récipient (5) notamment à symétrie de révolution et en particulier allant en diminuant.

8. Procédé selon l'une des revendications précédentes,
**caractérisé en ce que** le milieu de transport (15) pénètre dans le récipient (5) par le biais d'une buse (16) à peu près de manière parallèle à la paroi de récipient (30) et à peu près perpendiculairement à un axe de récipient (18).

9. Procédé selon l'une des revendications précédentes,
**caractérisé en ce que** la matière solide (2) est amenée dans le récipient (5) par le biais d'une écluse à roue cellulaire.

10. Procédé selon l'une des revendications précédentes,
**caractérisé en ce que** la matière solide (2) est amenée au récipient (5) dans une zone (20) non traversée par le flux de milieu de transport (15).

11. Procédé selon l'une des revendications précédentes,
**caractérisé en ce que** la matière solide (2) est amenée dans un cône creux (38) formé par le milieu de transport (15).

12. Procédé selon l'une des revendications précédentes,
**caractérisé en ce que** la matière solide (2) est amenée en tant que mélange matière solide/liquide (21) dans le milieu de transport (15).

13. Procédé selon l'une des revendications précédentes,
**caractérisé en ce que** le profil d'écoulement du flux (17) dans le récipient (5) est déterminé par une modification de la section transversale d'entrée (A).

14. Procédé selon l'une des revendications précédentes,
**caractérisé en ce qu'**un niveau (25) du milieu de transport (15) dans le récipient (5) est réglé par une régulation à pression de gaz (26).

15. Dispositif destiné à transporter une matière solide dans un milieu de transport comportant un récipient d'émission (5) avec une sortie (7), un flux tournant descendant (17) du milieu de transport et un dispositif d'introduction servant à introduire la matière solide dans le milieu de transport dans le récipient d'émission (5),
**caractérisé en ce que** le récipient d'émission (5) est sous pression par rapport au milieu ambiant.
